# EUROPÄISCHE PATENTANMELDUNG

(11) **EP 2 881 613 A1**
(43) Veröffentlichungstag der Anmeldung: **10.06.2015**
(21) Anmeldenummer: 14193152.7
(22) Anmeldetag: 14.11.2014
(51) Int. Cl.: F16F 7/12

(54) **Energieverzehrvorrichtung, insbesondere Stoßsicherung für ein spurgeführtes Fahrzeug**

(30) Priorität: 04.12.2013 DE 102013224833
(71) Anmelder: Voith Patent GmbH, 89522 Heidenheim (DE)
(72) Erfinder: Ende, Sascha, 37632 Eschershausen (DE)

(57) **Zusammenfassung**

Die Erfindung betrifft eine Energieverzehrvorrichtung (1), insbesondere Stoßsicherung für ein spurgeführtes Fahrzeug, mit einem Energieverzehrelement (10) und einem derart mit dem Energieverzehrelement (10) zusammenwirkenden Gegenelement (20), dass sich bei Überschreiten einer kritischen, in die Energieverzehrvorrichtung (1) eingeleiteten Stoßkraft das Gegenelement (20) und das Energieverzehrelement (10) unter gleichzeitigem Verzehr von zumindest einem Teil der in die Energieverzehrvorrichtung (1) eingeleiteten Stoßenergie relativ zueinander aufeinander zu bewegen, wobei im Übergangsbereich vom Führungsbereich (15) zum Energieverzehrbereich (11) des Energieverzehrelementes (10) zumindest eine Anschlageinrichtung (13) für das Gegenelement (20) vorgesehen ist. Die Erfindung ist dadurch charakterisiert, dass die Anschlageinrichtung (13) zumindest eine Anschlagfläche (14) zum Zusammenwirken mit dem Gegenelement (20) umfasst, die in Längsrichtung des Energieverzehrelementes (10) betrachtet geneigt verlaufend ausgebildet ist.

## Beschreibung

Die Erfindung betrifft eine Energieverzehrvorrichtung, insbesondere Stoßsicherung für ein spurgeführtes Fahrzeug, mit den Merkmalen aus dem Oberbegriff von Anspruch 1.

Eine derartige Vorrichtung ist beispielsweise aus EP 2 295 305 B1 vorbekannt. Diese umfasst ein Energieverzehrelement und ein derart mit dem Energieverzehrelement zusammenwirkendes Gegenelement, dass sich bei Überschreiten einer kritischen, in die Energieverzehrvorrichtung eingeleiteten Stoßkraft das Gegenelement und das Energieverzehrelement unter gleichzeitigem Verzehr von zumindest einem Teil der in die Energieverzehrvorrichtung eingeleiteten Stoßenergie relativ zueinander aufeinander zu bewegen, wobei
- das Energieverzehrelement mindestens einen Energieverzehrbereich aus Faserverbundwerkstoff, welcher bei der Bewegung des Gegenelementes relativ zu dem Energieverzehrelement zumindest teilweise nicht-duktil zerfasert wird, und einen Führungsbereich für das Gegenelement aufweist und
- im Übergangsbereich zwischen Energieverzehrbereich und Führungsbereich des Energieverzehrelementes zumindest eine Anschlageinrichtung für das Gegenelement vorgesehen ist.

Der Erfindung lag die Aufgabe zugrunde, das Ansprechverhalten im Lastfall zu optimieren und den Aufwand für die Einzelkomponenten möglichst gering zu halten.

Die erfindungsgemäße Energieverzehrvorrichtung, insbesondere Stoßsicherung für ein spurgeführtes Fahrzeug, mit einem Energieverzehrelement und einem derart mit dem Energieverzehrelement zusammenwirkenden Gegenelement, dass sich bei Überschreiten einer kritischen, in die Energieverzehrvorrichtung eingeleiteten Stoßkraft das Gegenelement und das Energieverzehrelement unter gleichzeitigem Verzehr von zumindest einem Teil der in die Energieverzehrvorrichtung eingeleiteten Stoßenergie relativ zueinander aufeinander zu bewegen, wobei
- das Energieverzehrelement mindestens einen Energieverzehrbereich aus Faserverbundwerkstoff, welcher bei der Bewegung des Gegenelementes relativ zu dem Energieverzehrelement zumindest teilweise nicht-duktil zerfasert wird, und einen Führungsbereich für das Gegenelement aufweist;
- im Übergangsbereich zwischen Energieverzehrbereich und Führungsbereich des Energieverzehrelementes zumindest eine Anschlageinrichtung für das Gegenelement vorgesehen ist;
ist dadurch gekennzeichnet, dass die Anschlageinrichtung zumindest eine Anschlagfläche zum Zusammenwirken mit dem Gegenelement umfasst, die in Längsrichtung des Energieverzehrelementes betrachtet geneigt ausgebildet ist.

Die geneigte Ausbildung beinhaltet die Ausrichtung der Anschlagfläche in einem Winkel zu einer Schnittebene, die durch zwei Senkrechte zur Längsrichtung beschreibbar ist. D.h. eine Ausrichtung der Anschlagfläche erfolgt frei von einer Lage im 90°-Winkel zur Längsrichtung.

Die erfindungsgemäße Lösung bietet durch die spezielle Ausgestaltung des Übergangsbereiches den Vorteil, dass im Lastfall das Gegenelement mit seiner zum Energieverzehrelement gewandten Stirnseite zuerst nur eine Linienberührung mit der Anschlagfläche eingeht und sich die wirksame Kontaktfläche dann erst vergrößert. Die Vorteile bestehen in der Reduktion des ersten Kraftpeaks. Dadurch wird die dahinterliegende Struktur weniger stark belastet und kann entsprechend dem abgeminderten Kraftpeak konstruktiv schwächer ausgebildet sein.

Bezüglich der konkreten Ausbildung der Anschlageinrichtung besteht eine Mehrzahl von Möglichkeiten. In besonders vorteilhafter Weise wird die einzelne Anschlagfläche von einem am Energieverzehrelement ausgebildeten oder mit diesem verbundenen Vorsprung gebildet. Die einteilige Ausbildung bietet den Vorteil einer einfachen Fertigung. Eine gleichmäßige Lasteinleitung wird dadurch gewährleistet, dass die einzelne Anschlagfläche in Umfangsrichtung des Energieverzehrelementes betrachtet geschlossen ausgeführt ist.

In einer alternativen Ausbildung besteht auch die Möglichkeit, eine Mehrzahl von in Umfangsrichtung des Energieverzehrelementes beabstandet zueinander angeordneten Anschlagflächen vorzusehen.

In vorteilhafter Ausbildung sind das Gegenelement als Kolben und zumindest der dem Gegenelement zugewandte Bereich des Energieverzehrelementes als Zylinder ausgebildet. Der dem Energieverzehrelement zugewandte Bereich des Gegenelementes wird von dem Energieverzehrelement teleskopartig aufgenommen, so dass die Stirnseite des dem Energieverzehrelement zugewandten Bereiches des Gegenelementes an der Anschlageinrichtung anstößt. Ist das Gegenelement als ein an seiner dem Energieverzehrelement zugewandten Stirnseite offener Hohlkörper ausgebildet, sodass die bei der Bewegung des Gegenelementes relativ zu dem Energieverzehrelement entstehenden Bruchteile des aus Faserverbundwerkstoff gebildeten Energieverzehrbereiches zumindest teilweise im Inneren des Hohlkörpers aufnehmbar sind, kann eine nach außen vollständig gekapselte Energieverzehrvorrichtung geschaffen werden, die Beschädigungen von Bauteilen oder Personen im Lastfall vermeidet.

Bei dieser Ausführung kann der Innendurchmesser des Führungsbereiches größer als der Außendurchmesser des Gegenelementes sein, so dass der dem Energieverzehrelement zugewandte Bereich des Gegenelementes teleskopartig von dem zum Gegenelement gerichteten Bereich des Energieverzehrelementes aufnehmbar ist und der Innendurchmesser des Energieverzehrbereiches ist zur Realisierung des Zusammenwirkens vorzugsweise mindestens 1mm kleiner als der Außendurchmesser des Gegenelementes.

Der Vorteil der Ausbildung des Energieverzehrelementes und/oder das Gegenelementes vollständig aus Faserverbundwerkstoff besteht in der mit der Leichtbauweise verbundenen Reduzierung des Gesamtgewichtes der Energieverzehrvorrichtung.

Faserverbundwerkstoffe sind auf in polymere Matrixsysteme eingebetteten Verstärkungsfasern aufgebaut, wobei die Matrix die Fasern in einer vorbestimmten Position hält, Spannungen zwischen den Fasern überträgt und die Fasern vor äußeren Einflüssen schützt, werden die mechanischen Eigenschaften durch die Verstärkungsfasern definiert. Als Verstärkungsfasern sind insbesondere Aramid-, Glas- und Kohlenstofffasern geeignet. Da Aramidfasern aufgrund ihrer Dehnbarkeit nur eine relativ niedrige Steifigkeit aufweisen, werden zur Ausbildung des Energieverzehrbereiches insbesondere Glas- und Kohlenstofffasern bevorzugt.

Die erfindungsgemäße Energieverzehrvorrichtung ist in besonders vorteilhafter Anwendung als Stoßsicherung im Untergestell oder in einer Wagenkastenstruktur eines spurgeführten Fahrzeuges, insbesondere eines Schienenfahrzeuges, oder als Stoßsicherung einer stationären Anlage, insbesondere eines Prellbocks ausgebildet.

Die erfindungsgemäße Lösung ist nachfolgend anhand von Figuren erläutert. Darin ist im Einzelnen folgendes dargestellt:
Figur 1a verdeutlicht in schematisiert vereinfachter Darstellung eine erfindungsgemäß ausgebildete Energieverzehrvorrichtung in Perspektivdarstellung;
Figur 1b zeigt die Energieverzehrvorrichtung aus Figur 1a in einem Axialschnitt;
Figur 2a zeigt einen Ausschnitt aus einer Ansicht gemäß Figur 1b im Detail;
Figur 2b zeigt einen Schnitt A-A aus Figur 2a;
Figur 3 zeigt eine weitere Ausführung eines Übergangsbereiches zwischen Führungsbereich und Energieverzehrbereich in einem Axialschnitt.

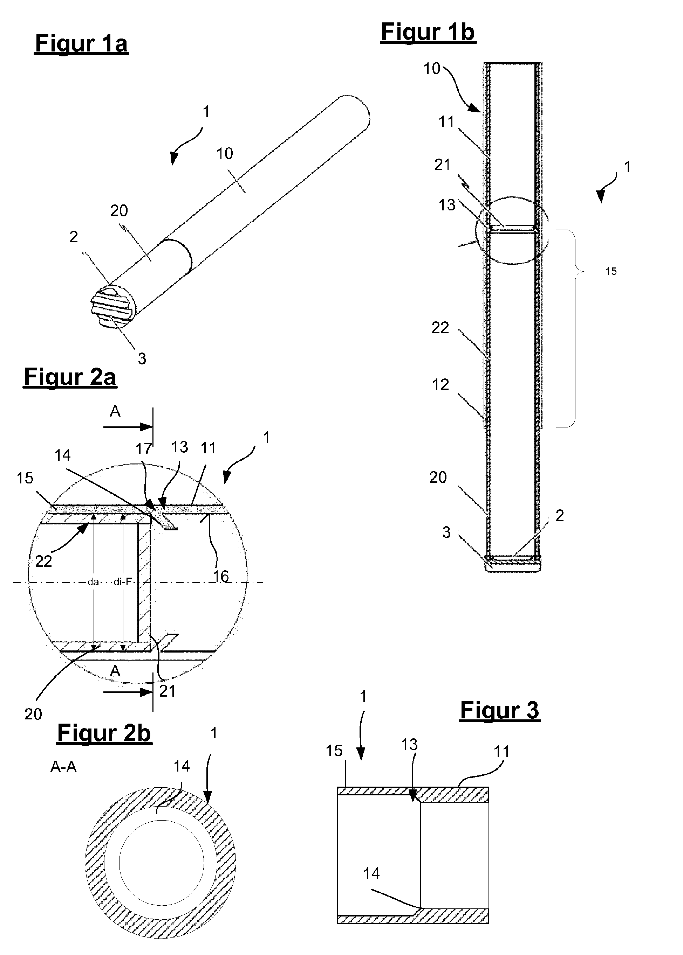

Die Figuren 1a und 1b zeigen exemplarische Ausführungsform einer Energieverzehrvorrichtung 1. Die Figur 1a zeigt eine Perspektivansicht. In Figur 1b ist die Energieverzehrvorrichtung 1 in einer Längsschnittdarstellung gezeigt.

Die Energieverzehrvorrichtung 1 umfasst ein Energieverzehrelement 10 mit zumindest einem Energieverzehrbereich 11 und ein Gegenelement 20, die beide jeweils durch eine Erstreckung in Längsrichtung charakterisiert sind und in Längsrichtung teilweise relativ zueinander verschiebbar sind. Das Gegenelement 20 ist mit einem Teilbereich seiner Erstreckung in Längsrichtung vom Energieverzehrelement 10 teleskopartig aufgenommen. Das Gegenelement 20 ist dazu über zumindest den teleskopartig vom Energieverzehrelement 10 aufnehmbaren Bereich als Kolben ausgeführt, während der vom Energieverzehrelement 10 gebildete, dem Gegenelement 20 zugewandte Bereich und diesen aufnehmende Bereich 12 des Energieverzehrelementes 10 als Zylinder ausgebildet ist. In die Energieverzehrvorrichtung 1, und insbesondere in das als Kolben ausgebildete Gegenelement 20 eingeleitete Stoßkräfte werden in die dem Energieverzehrelement 10 abgewandte Stirnseite 2 des Gegenelementes 20 eingeleitet. Optional ist es denkbar, an der Stirnseite 2 des Gegenelementes 20 einen Aufkletterschutz 3 anzubringen, um beim Einsatz in spurgeführten Fahrzeugen, insbesondere Schienenfahrzeugen, ein horizontales Ausscheren der Stirnseite 2 des Gegenelementes 20 zu verhindern.

Das Energieverzehrelement 10 weist einen Energieverzehrbereich 11 sowie einen Führungsbereich 15 auf. Im Übergangsbereich zwischen dem Energieverzehrbereich 11 und dem Führungsbereich 15 ist eine Anschlageinrichtung 13 vorgesehen. Die Anschlageinrichtung 13 umfasst zumindest eine zum Gegenelement 20 weisende Anschlagfläche 14, die im Lastfall mit einer am Gegenelement 20 ausgebildeten und zum Energieverzehrelement 10 weisenden Anlagefläche 21 zusammenwirkt. Die Anschlageinrichtung 13 bildet erfindungsgemäß eine geschrägte Führung. D.h. die zumindest eine, diese bildende Anschlagfläche 14 ist in ihrer Ausrichtung gegenüber der Erstreckung des Energieverzehrelementes 10 in Längsrichtung in einem Winkel zu dieser angeordnet. Die Anschlagfläche 14 ist jedoch frei von einer Ausrichtung in einer Ebene senkrecht zur Längsrichtung des Energieverzehrelementes 10.

Die Ausrichtung der Anschlagfläche 14, hier am Innenumfang des Energieverzehrelementes 10 in einem Winkel zur Radialrichtung bewirkt in vorteilhafter Weise im Lastfall zuerst zu eine Linienberührung zwischen der Anschlagfläche 14 und der Anlagefläche 21 des Gegenelementes 20.

In besonders vorteilhafter Ausbildung weist die Anschlageinrichtung 13 eine in Umfangsrichtung am Innenumfang 16 des Energieverzehrelementes 10 angeordnete und umlaufende geschlossene Anschlagfläche 14 auf. Diese wird in einer besonders bevorzugten Ausbildung gemäß Figur 2a, welche ein Detail A aus Figur 1b wiedergibt, von einem am Innenumfang 16 vorgesehenen und einteilig mit diesem ausgebildeten Vorsprung 17 gebildet. Der Vorsprung 17 ist in Umfangrichtung am Innenumfang 16 umlaufend ausgebildet. Die Anordnung erfolgt in einer Axialschnittebene, d.h. einer Ebene, die durch zwei Senkrechte zur Längsrichtung beschreibbar ist.

Der Führungsbereich 15 des Energieverzehrelementes 10 ist bei der dargestellten Ausführungsform der Energieverzehrvorrichtung 1 als Führungsrohr ausgebildet, dessen Innendurchmesser di-F größer als der Außendurchmesser dA des als Kolben ausgebildeten Bereiches des Gegenelementes 20 ist. Auf diese Weise kann der dem Energieverzehrelement 10 zugewandte Bereich 22 des Gegenelementes 20 teleskopartig von dem Energieverzehrelement 10 aufgenommen werden. Das Energieverzehrelement 1 weist ferner im Energieverzehrbereich 11 einen Innendurchmesser di-E auf, welcher kleiner als der Außendurchmesser dA des Gegenelementes 20 ist.

Im normalen Betrieb, wenn also die über die Stirnseite 2 in das Gegenelement 20 eingeleiteten Stoßkräfte nicht die für das Ansprechen der Energieverzehrvorrichtung 1 kritische Stoßkraft überschreiten, werden die in das Gegenelement 20 eingeleiteten Stoßkräfte über die Stirnseite 21 des Gegenelementes 20 in den Übergangsbereich zwischen Führungsbereich 15 und Energieverzehrbereich 11 des Energieverzehrelementes 10 eingeleitet. Von dort werden die Stoßkräfte auf die Struktur des Wagenkastens übertragen, mit welchem die Energieverzehrvorrichtung 1 verbunden ist.

Der Energieverzehrbereich 11 besteht vorzugsweise aus einem Faserverbundwerkstoff. Die für das Ansprechen der Energieverzehrvorrichtung 1 kritische Stoßkraft wird durch Triggerung des Energieverzehrbereiches 11 und die Geometrie des Gegenelementes 20 bestimmt. Beim Ansprechen der Energieverzehrvorrichtung 1 wird das Faserverbundmaterial der Innenwand des Energieverzehrbereiches 11 von dem sich relativ zu dem Energieverzehrelement 10 in Richtung des Energieverzehrbereiches 11 bewegenden Gegenelement 20 nicht-duktil zerfasert. Vorzugsweise wird von dem sich in Richtung Energieverzehrbereich 11 bewegenden Gegenelement 20 nur das Material des Energieverzehrbereiches 11 nicht-duktil zerfasert wird, welches die Innenwand des Energieverzehrbereiches 11 bildet. Beim Energieverzehr schiebt sich somit das Gegenelement 20 weiter in das Energieverzehrelement 10 hinein und schabt dabei den Innenbereich des Energieverzehrbereiches 11 aus. Bei diesem Abschaben wird Material des Energieverzehrbereiches 11 zerfasert, wobei die Außenwand des Energieverzehrbereiches 11 jedoch nicht in Mitleidenschaft gezogen wird. Die verbleibende Außenwand des Energieverzehrbereiches 11 dient als Führungsfläche zum Führen der Bewegung des Gegenelementes 20 gegenüber dem Energieverzehrelement 10.

Das als Kolben ausgeführte Gegenelement 20 kann als ein an seiner dem Energieverzehrelement 10 zugewandten Stirnseite 21 offener Hohlkörper ausgebildet sein. Die bei der Bewegung des Gegenelementes 20 relativ zu dem Energieverzehrelement 10 entstehenden Bruchteile des aus Faserverbundwerkstoff gebildeten Energieverzehrbereiches 11 werden dabei (zumindest teilweise) im Inneren des Hohlkörpers aufgenommen. Dies hat den Vorteil, dass bei dem Zerfasern des Energieverzehrbereiches 11 keine Bruchteile des Faserverbundwerkstoffes nach außen gelangen können.

Denkbar, jedoch hier nicht dargestellt ist auch eine nichteinteilige Ausführung des Energieverzehrelementes 10, beispielsweise umfassend ein den Führungsbereich bildendes Führungsrohr, welches beispielsweise aus Faserverbundwerkstoff oder einem anderen Material gebildet sein kann und ein aus Faserverbundwerkstoff gebildeter Energieverzehrbereich 11, der im Führungsrohr aufgenommen ist.

Insbesondere ist die Erfindung nicht darauf beschränkt, dass das Gegenelement 20 als Kolben und zumindest der dem Gegenelement 20 zugewandte Bereich 12 des Energieverzehrelementes 10 als Zylinder ausgebildet ist, wobei der dem Energieverzehrelement 10 zugewandte Bereich 22 des Gegenelementes 20 von dem Energieverzehrelement 10 teleskopartig aufgenommen wird. Vielmehr ist es beispielsweise auch denkbar, das Energieverzehrelement 10 als Kolben und zumindest der dem Energieverzehrelement 10 zugewandte Bereich 22 des Gegenelementes 20 als Zylinder auszubilden, wobei der dem Gegenelement 20 zugewandte Bereich 12 des Energieverzehrelementes 10 von dem Gegenelement 20 teleskopartig aufgenommen wird.

Ferner ist es denkbar, bei der in der Figur 1b dargestellten Ausführungsform den Außenbereich des Energieverzehrelementes 10, d.h. die Außenwand des Energieverzehrbereiches 11 einerseits und den Führungsbereich 15 andererseits, durch eine geeignete Ausrichtung der Fasern des Faserverbundwerkstoffes insgesamt fester zu gestalten im Vergleich zu dem Bereich des Energieverzehrbereiches 11, der beim Ansprechen der Energieverzehrvorrichtung 1 nicht-duktil zerfasert wird.

## Patentansprüche

1. Energieverzehrvorrichtung (1), insbesondere Stoßsicherung für ein spurgeführtes Fahrzeug, mit einem Energieverzehrelement (10) und einem derart mit dem Energieverzehrelement (10) zusammenwirkenden Gegenelement (20), dass sich bei Überschreiten einer kritischen, in die Energieverzehrvorrichtung (1) eingeleiteten Stoßkraft das Gegenelement (20) und das Energieverzehrelement (10) unter gleichzeitigem Verzehr von zumindest einem Teil der in die Energieverzehrvorrichtung (1) eingeleiteten Stoßenergie relativ zueinander aufeinander zu bewegen, wobei
- das Energieverzehrelement (10) mindestens einen Energieverzehrbereich (11) aus Faserverbundwerkstoff, welcher bei der Bewegung des Gegenelementes (20) relativ zu dem Energieverzehrelement (10) zumindest teilweise nicht-duktil zerfasert wird, und einen Führungsbereich (15) für das Gegenelement (20) aufweist;
- im Übergangsbereich vom Führungsbereich zum Energieverzehrbereich des Energieverzehrelementes zumindest eine Anschlageinrichtung (14) für das Gegenelement (20) vorgesehen ist;
**dadurch gekennzeichnet,**
**dass** die Anschlageinrichtung (13) zumindest eine Anschlagfläche (14) zum Zusammenwirken mit dem Gegenelement (20) umfasst, die in Längsrichtung des Energieverzehrelementes betrachtet geneigt verlaufend ausgebildet ist.

2. Energieverzehrvorrichtung (1) nach Anspruch 1,
**dadurch gekennzeichnet,**
**dass** die einzelne Anschlagfläche (14) von einem am Energieverzehrelement ausgebildeten oder mit diesem verbundenen Vorsprung gebildet ist.

3. Energieverzehrvorrichtung (1) nach Anspruch 1 oder 2,
**dadurch gekennzeichnet,**
**dass** eine einzelne Anschlagfläche (14) vorgesehen ist, die in Umfangsrichtung des Energieverzehrelementes betrachtet geschlossen ausgeführt ist.

4. Energieverzehrvorrichtung (1) nach Anspruch 1 oder 2,
**dadurch gekennzeichnet,**
**dass** eine Mehrzahl von in Umfangsrichtung des Energieverzehrelementes (10) beabstandet zueinander angeordneten Anschlagflächen (14) vorgesehen ist.

5. Energieverzehrvorrichtung (1) nach einem der vorgenannten Ansprüche,
**dadurch gekennzeichnet,**
**dass** das Gegenelement (20) als Kolben und zumindest der dem Gegenelement (20) zugewandte Bereich (12) des Energieverzehrelementes (10) als Zylinder ausgebildet ist, und wobei der dem Energieverzehrelement (10) zugewandte Bereich (22) des Gegenelementes (20) von dem Energieverzehrelement (10) teleskopartig aufgenommen ist derart, dass die Stirnseite (21) des dem Energieverzehrelement (10) zugewandten Bereiches (22) des Gegenelementes (20) an der Anschlageinrichtung (13) anstößt.

6. Energieverzehrvorrichtung (1) nach einem der vorgenannten Ansprüche,
**dadurch gekennzeichnet,**
**dass** das Gegenelement (20) als ein an seiner dem Energieverzehrelement (10) zugewandten Stirnseite (21) offener Hohlkörper ausgebildet ist derart, dass die bei der Bewegung des Gegenelementes (20) relativ zu dem Energieverzehrelement (10) entstehenden Bruchteile des aus Faserverbundwerkstoff gebildeten Energieverzehrbereiches (11) zumindest teilweise im Inneren des Hohlkörpers aufnehmbar sind.

7. Energieverzehrvorrichtung (1) nach einem der Ansprüche 5 oder 6;
**dadurch gekennzeichnet,**
**dass** der Innendurchmesser des Führungsbereiches (15) größer als der Außendurchmesser des Gegenelementes (20) ist, so dass der dem Energieverzehrelement (10) zugewandte Bereich (22) des Gegenelementes (20) teleskopartig von dem des Energieverzehrelementes (10) aufnehmbar ist und der Innendurchmesser des Energieverzehrbereiches (11) mindestens 1 mm kleiner als der Außendurchmesser des Gegenelementes (20).

8. Energieverzehrvorrichtung (1) nach einem der Ansprüche 1 bis 4;
**dadurch gekennzeichnet,**
**dass** zumindest der dem Energieverzehrelement (10) zugewandte Bereich (22) des Gegenelementes (20) als Zylinder und das Energieverzehrelement (10) als Kolben ausgebildet ist, und wobei der dem Gegenelement (20) zugewandte Bereich (12) des Energieverzehrelementes (10) von dem Gegenelement (20) teleskopartig aufgenommen ist derart, dass die dem Gegenelement (20) zugewandte Stirnseite (14) des Energieverzehrbereiches (11) an einer Anschlageinrichtung (13) des Gegenelementes (20) anstößt.

9. Energieverzehrvorrichtung (1) nach einem der vorgenannten Ansprüche;
**dadurch gekennzeichnet,**
**dass** das Energieverzehrelement (10) und/oder das Gegenelement vollständig aus Faserverbundwerkstoff gebildet sind.

10. Energieverzehrvorrichtung (1) nach einem der vorgenannten Ansprüche;
**dadurch gekennzeichnet,**
**dass** diese als Stoßsicherung im Untergestell oder in einer Wagenkastenstruktur eines spurgeführten Fahrzeuges, insbesondere eines Schienenfahrzeuges, oder als Stoßsicherung einer stationären Anlage, insbesondere eines Prellbocks ausgebildet ist.
